# FASCICULE DE BREVET EUROPEEN

(11) **EP 3 244 504 B1**
(45) Date de publication et mention de la délivrance du brevet: **11.08.2021**
(21) Numéro de dépôt: 17170561.9
(22) Date de dépôt: 11.05.2017
(51) Int. Cl.: H02H 9/04, H02H 9/06

(54) **DISPOSITIF DE PROTECTION CONTRE LES SURTENSIONS TRANSITOIRES**
SCHUTZVORRICHTUNG GEGEN VORÜBERGEHENDE ÜBERSPANNUNGEN
TRANSIENT SURGE PROTECTION DEVICE

(30) Priorité: 12.05.2016 FR 1654243
(43) Date de publication de la demande: 15.11.2017
(73) Titulaire: CITEL, 92310 Sèvres (FR)
(72) Inventeur: CREVENAT, Vincent, 92316 SEVRES CEDEX (FR); JOUBERT, Jacques, 92316 SEVRES CEDEX (FR)
(74) Mandataire: Loyer & Abello

(56) Documents cités:
- EP-A1- 0 895 332
- EP-A1- 1 447 831
- US-A1- 2002 024 792
- US-B2- 7 656 640

## Description

### Domaine technique :

L'invention se rapporte au domaine des composants de protection contre les surtensions pour un équipement électrique.

### Arrière-Plan technologique :

Pour la protection d'un équipement électrique, il est d'usage d'utiliser, entre les deux lignes d'un secteur alternatif, une varistance à oxyde métallique, notamment à oxyde de zinc, montée en série d'une part avec un élément thermofusible de déconnexion, et d'autre part avec un éclateur à gaz.

Un tel dispositif fonctionne théoriquement de la manière suivante : l'éclateur à gaz supporte pratiquement toute la tension alternative du secteur. En effet, la capacité parasite de l'éclateur est de l'ordre du picofarad alors que la capacité parasite de la varistance est de quelques à quelques dizaines de nanofarads. Lorsque survient une surtension, elle provoque l'amorçage de l'éclateur à gaz, qui ne peut s'éteindre que si le courant, dit de suite, qui le traverse ultérieurement devient suffisamment faible. C'est la résistance de la varistance qui assure la limitation du courant de suite et permet l'extinction de l'éclateur à gaz.

Lorsqu'un dispositif de protection contre les surtensions a fonctionné un certain nombre de fois ou d'une manière continue suite à une surtension prolongée, ses composants arrivent en fin de vie. Pour un éclateur à gaz, la fin de vie correspond à une mise en court-circuit. En revanche, pour une varistance, la fin de vie peut se traduire par une explosion pour des phénomènes impulsionnels ou par une forte diminution de sa résistance interne (tendant vers le court-circuit) pouvant souvent aller jusqu'à son inflammation. Par mesure de sécurité, l'éclateur à gaz peut être conçu pour que son aptitude à écouler les impulsions énergétiques liées aux surtensions soit inférieure à celle de la varistance. De cette manière, c'est l'éclateur à gaz qui arrive le premier en fin de vie et qui se met en court-circuit.

La tension du secteur se trouve alors totalement reportée sur la varistance, qui s'échauffe et entraîne la fusion de l'élément thermofusible et la déconnexion thermique, c'est-à-dire la mise hors service du dispositif de protection.

Cependant, il est difficile de s'assurer de la fiabilité de la déconnexion produite par la fusion de l'élément thermofusible.

Le document US7656640 décrit un dispositif selon la préambule de la revendication 1.

### Résumé de l'invention :

Une idée à la base de l'invention est de fournir un dispositif de protection contre les surtensions transitoires assurant une déconnexion totale en fin de vie des composants, par une meilleure sensibilité à la déconnexion.

Selon un mode de réalisation, l'invention fournit un dispositif de protection contre les surtensions transitoires, comportant :
- une varistance comportant un corps de varistance et deux électrodes disposées de part et d'autre du corps de varistance, le corps de varistance étant apte à monter en température lorsque la tension imposée entre les deux électrodes dépasse un premier seuil,
- un éclateur comportant un corps d'éclateur et deux électrodes d'éclateur disposées de part et d'autre du corps d'éclateur, le corps d'éclateur étant apte à générer un arc électrique entre les deux électrodes et à s'échauffer lorsque la tension imposée entre les deux électrodes dépasse un second seuil,
- une brasure thermofusible fixant une première électrode de l'éclateur et une première électrode de la varistance, la brasure thermofusible étant conductrice d'électricité et étant apte à fondre au-delà d'un seuil de température lorsque la varistance ou l'éclateur s'échauffe,
- la seconde électrode de varistance étant destinée à être connectée à une première ligne électrique et la seconde électrode d'éclateur étant destinée à être connectée à une seconde ligne électrique, et
- un organe de rappel exerçant un effort de rappel tendant à éloigner la première électrode de la varistance de la première électrode d'éclateur de manière à permettre une séparation entre la première électrode de la varistance et la première électrode d'éclateur lors d'une fusion de la brasure thermofusible.

Grâce à ces caractéristiques, des équipements électriques connectés à la première ligne électrique ou à la seconde ligne électrique sont protégés contre les surtensions transitoires s'exerçant entre la première ligne électrique et la seconde ligne électrique. Grâce à ces caractéristiques, le dispositif de protection contre les surtensions transitoires est protégé contre un éventuel incendie provoqué par la varistance quand elle arrive en fin de vie.

Le dispositif est particulièrement avantageux en ce qu'il est rendu très sensible à la déconnexion thermique par le fait que la brasure thermofusible est disposée entre la varistance et l'éclateur, chacun pouvant provoquer sa fusion.

Il existe de nombreux équipements susceptibles d'être protégés par un dispositif de protection selon l'invention. Par exemple, les équipements électronique, téléphonique, informatique, photovoltaïque, d'éclairage à diodes électroluminescentes, éoliens, de radiocommunications et autres.

Selon des modes de réalisation, un tel dispositif comporte une ou plusieurs des caractéristiques suivantes :
Dans un mode de réalisation, l'éclateur est mobile.
Dans un mode de réalisation, l'organe de rappel est apte à déplacer l'éclateur lors d'une fusion de la brasure thermofusible.
Dans un mode de réalisation, le dispositif de protection comporte une lame fixée à l'éclateur, la lame étant apte à se déplacer lors de la fusion de la brasure thermofusible d'une position de connexion dans laquelle les premières électrodes d'éclateur et de varistance sont fixées par la brasure thermofusible à une position de déconnexion dans laquelle les premières électrodes d'éclateur et de varistance sont placées à distance l'une de l'autre.
Dans un mode de réalisation, la lame est apte à déplacer l'éclateur.
Dans un mode de réalisation, la lame est fixée à l'éclateur via la seconde électrode et est conductrice d'électricité, de sorte à assurer une connexion électrique entre la seconde électrode d'éclateur et la seconde ligne électrique.

La lame est apte à se déplacer de la position de connexion de la lame vers la position de déconnexion de la lame dans n'importe quelle direction. Dans un mode de réalisation, la lame est apte à se déplacer de la position de connexion de la lame vers la position de déconnexion de la lame dans une direction sensiblement perpendiculaire à un plan de la première électrode d'éclateur ou de varistance. Dans un mode de réalisation, la lame est apte à se déplacer de la position de connexion de la lame vers la position de déconnexion de la lame dans une direction sensiblement parallèle à un plan de la première électrode d'éclateur ou de varistance.

Dans un mode de réalisation, la lame est une lame élastique qui est précontrainte dans sa position de connexion de manière à exercer une force de rappel intrinsèque vers sa position de déconnexion.

Dans un mode de réalisation, l'organe de rappel est un ressort agissant sur la lame, et configuré pour rappeler la lame vers sa position de déconnexion.

Dans un mode de réalisation, le ressort est un ressort hélicoïdal contraint entre la lame et une surface parallèle à la première électrode de varistance.

Dans un mode de réalisation, le dispositif comporte en outre un isolateur apte à s'intercaler entre la première électrode d'éclateur et la première électrode de varistance lorsque la brasure thermofusible fond. Grâce à ces caractéristiques, un éventuel arc électrique entre la varistance et l'éclateur lors de la fusion de la brasure thermofusible est évité.

Un tel isolateur a notamment une fonction de coupe-arc électrique.

Dans un mode de réalisation, l'isolateur comporte une tablette isolante montée mobile d'une position non-intercalée vers une position intercalée dans laquelle la tablette isolante est disposée entre les premières électrodes de varistance et d'éclateur sous l'effet d'une force de rappel exercée par un ressort.

Il existe d'autres façons de provoquer l'insertion d'un isolateur entre la varistance et l'éclateur. Par exemple, dans un autre mode de réalisation, l'isolateur comporte une tablette isolante qui est montée mobile sous l'effet de la gravité d'une position non-intercalée vers une position intercalée dans laquelle la tablette isolante est disposée entre les premières électrodes de varistance et d'éclateur.

Dans un mode de réalisation, la tablette isolante est montée mobile en rotation entre la position non-intercalée et la position intercalée.

Dans un mode de réalisation, la tablette isolante est en plastique.

Dans un mode de réalisation, l'organe de rappel est un ressort agissant sur l'isolateur et contraignant l'isolateur contre l'éclateur de telle sorte que, lors d'une fusion de la brasure thermofusible, l'isolateur déplace l'éclateur et éloigne la première électrode de la varistance de la première électrode d'éclateur.

Dans un mode de réalisation, la lame est une lame souple qui est précontrainte dans sa position de déconnexion de manière à exercer une force de rappel vers sa position de connexion.

Il existe plusieurs organes de rappel convenant pour déplacer l'au moins un d'entre la varistance et l'éclateur lors d'une fusion de la brasure thermofusible.

Dans un mode de réalisation, le dispositif comporte un ou plusieurs organes de rappel sélectionnés dans la liste consistant en : la lame élastique, le ressort exerçant la force de rappel sur la tablette isolante, le ressort agissant sur la lame.

Dans un mode de réalisation, le dispositif comporte en outre un boitier dans lequel sont agencés la varistance, la brasure thermofusible et l'éclateur et deux bornes de connexion faisant saillie hors du boîtier respectivement connectées à la seconde électrode d'éclateur et à la seconde électrode de varistance et destinées respectivement à être connectées à la première ligne électrique et à la seconde ligne électrique. Grâce à ces caractéristiques, le dispositif est compact.

Selon un mode de réalisation, l'une des bornes de connexion est formée d'un seul tenant avec la lame élastique.

Des soudures ou brasures réalisées entre n'importe quelle paire d'éléments du composant sélectionnés parmi les bornes de connexion, les électrodes d'éclateur ou de varistances sont des soudures ou brasures conductrices d'électricité. Dans un mode de réalisation, les soudures ou brasures sont réalisées en métal dont la température de fusion est supérieure à la température de fusion de la brasure thermofusible.

Dans un mode de réalisation, la brasure thermofusible comporte un alliage dont l'étain est le principal constituant. L'alliage comporte également un ou plusieurs éléments sélectionnés dans la liste constituant en : Pb, Cu, Zn, Ag, Bi, In, Sb afin de sélectionner une température de fusion de la brasure thermofusible qui soit plus basse que la température de fusion de l'étain. Par exemple, la brasure thermofusible comporte l'un des alliages sélectionnés dans la liste constituant en : SnPbAg, SnCuAg, et SnBi.

Selon un mode de réalisation, le corps de varistance est réalisé en oxyde métallique.

Selon un mode de réalisation, l'éclateur est un éclateur à gaz, également appelé en anglais « gas discharge tube (GDT) » ou « Gas-filled Spark Gap (GSG) ».

Selon un mode de réalisation, la varistance est sélectionnée parmi le groupe comprenant une varistance de toute forme dimensionnelle possible, par exemple de forme circulaire, tubulaire, rectangulaire, carrée ou diverses autres formes.

Selon un mode de réalisation, la varistance est une varistance à oxyde de zinc (ZnO).

### Description brève des figures :

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.

Sur ces dessins :
La figure 1 est une vue en perspective d'une partie d'un dispositif de protection contre les surtensions selon l'invention
La figure 2 est une vue en perspective éclatée d'une varistance pouvant convenir à la mise en oeuvre de l'invention.
La figure 3 est une vue en perspective de l'isolateur du dispositif de la figure 1.
La figure 4 est une vue en perspective d'un élément du boitier de la figure 1.
La figure 5 est une vue en perspective du dispositif de la figure 1, dans laquelle certains éléments ne sont pas représentés.
La figure 6 est une vue en perspective de la varistance et de l'éclateur dans un état déconnecté.
La figure 7 est une vue en perspective de la varistance et de l'éclateur de la figure 6 dans un état connecté, ainsi que l'isolateur de la figure 3, disposés dans l'élément de boitier de la figure 4.
La figure 8 est une vue conforme à la figure 7, dans laquelle l'élément de boitier n'est pas représenté.
La figure 9 est une vue conforme à la figure 7, dans laquelle la varistance et l'éclateur sont dans un état déconnecté.
La figure 10 est une vue conforme à la figure 9, dans laquelle la varistance et l'éclateur sont dans un état déconnecté et l'isolateur est dans une position intercalée.
La figure 11 est un schéma électrique du dispositif de la figure 1.
La figure 12 est une vue en perspective d'une partie d'un dispositif de protection dans un état déconnecté, selon un second mode de réalisation de l'invention.
La figure 13 est une vue en perspective d'une varistance et de bornes de connexion du dispositif de protection de la figure 12 dans un état déconnecté.
La figure 14 est une vue en perspective d'une partie d'un dispositif de protection dans un état connecté, selon un troisième mode de réalisation de l'invention.
La figure 15 est une vue en perspective d'un éclateur et d'une borne de connexion du dispositif de protection de la figure 14.

### Description détaillée de l'invention :

Un dispositif 1 destiné à protéger un équipement électrique contre les surtensions va maintenant être présenté en référence aux figures.

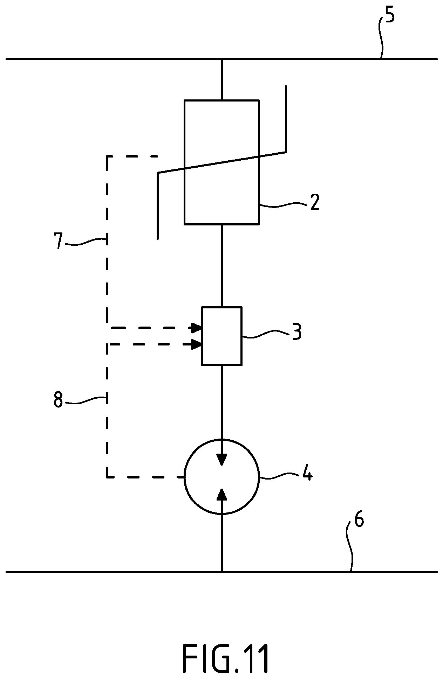

Le schéma électrique équivalent d'un dispositif de protection 1 selon l'invention va être décrit en relation avec la figure 11. Le dispositif 1 comporte un éclateur 4, une varistance 2 et une brasure thermofusible 3 montés en série entre deux lignes électriques 5 et 6 du circuit ou équipement électrique à protéger. Les lignes électriques 5 et 6 peuvent être tout conducteur servant à amener de l'énergie électrique sous une tension basse ou moyenne à un équipement électrique. La brasure thermofusible 3 est connectée à une première électrode de l'éclateur 4 et à une première électrode de la varistance 2. Un premier pont thermique 7 permet de diffuser la chaleur émise par la varistance 2 vers la brasure thermofusible 3. Un second pont thermique 8 permet de diffuser la chaleur émise par l'éclateur 4 vers la brasure thermofusible 3. Ainsi, la brasure thermofusible est sensible aux échauffements de la varistance 2 et de l'éclateur 4. Une seconde électrode de l'éclateur 4 est connectée à la ligne électrique 6 devant être protégée. Une seconde électrode de la varistance 2 est connectée à la ligne électrique 5 devant être protégée.

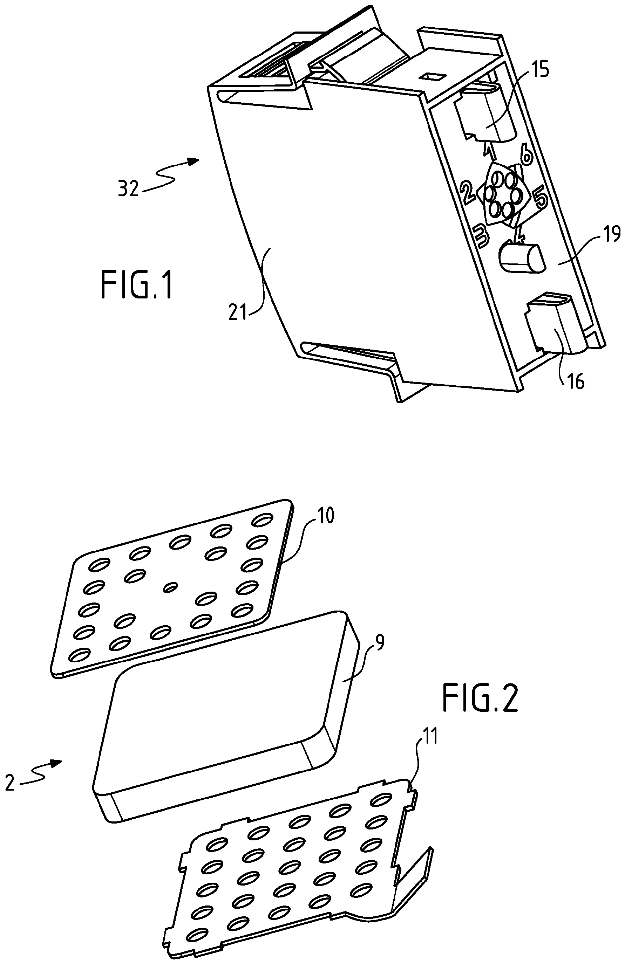

A présent, la structure d'un dispositif de protection 1 selon l'invention va être décrit en référence aux Figures 1 à 10.

Un tel dispositif de protection 1 comporte une varistance 2, par exemple une varistance de forme rectangulaire, comprenant une galette d'oxyde de zinc 9 rectangulaire et deux électrodes 10 et 11 également rectangulaires placées de part et d'autre de la galette d'oxyde de zinc 9, comme représenté sur la figure 2.

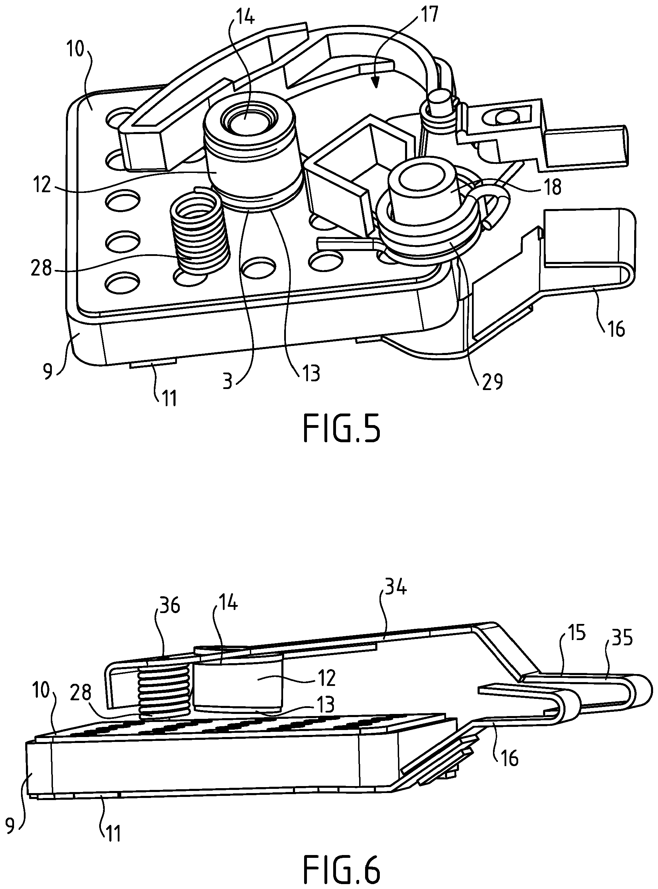

Le dispositif 1 comporte également un éclateur à gaz 4 notamment représenté sur les figures 5 et 6, comportant un corps cylindrique 12 et deux électrodes 13 et 14 de part et d'autre de ce corps cylindrique 12. De préférence, l'éclateur à gaz 4 est de petites dimensions. De préférence, l'éclateur à gaz 4 est un éclateur de type bipolaire. Par exemple, l'éclateur à gaz 4 est sélectionné parmi les éclateurs à gaz de référence BA, BB, BH, BG, BF de la marque CITEL.

Dans un état connecté du dispositif 1, par exemple représenté sur la figure 5, la première électrode 13 de l'éclateur 4 et la première électrode 10 de la varistance 2 sont disposées l'une sur l'autre, et fixées par l'intermédiaire de la brasure thermofusible 3 conductrice d'électricité. Ainsi, la connexion électrique est assurée entre les deux premières électrodes 10 et 13.

Le dispositif 1 est agencé dans un boitier 32 représenté en figure 1. Le dispositif 1 comporte aussi deux bornes de connexion 15 et 16 respectivement connectées électriquement aux secondes électrodes 11 et 14 de l'éclateur 4 et de la varistance 2. Dans le mode de réalisation représenté en référence aux figures 1 à 10, notamment sur la figure 6, la borne de connexion 15 comporte une lame élastique 34, par exemple réalisée en alliage de cuivre. La lame élastique 34 est fixée sur la seconde électrode 14 de l'éclateur 4, par exemple par une brasure. Par ailleurs, la borne de connexion 15 comporte une première extrémité 35 qui est destinée à connecter le dispositif 1 à une ligne électrique. La lame élastique 34 présente une seconde extrémité 36 qui s'étend au-delà de la fixation de la lame élastique 34 sur la seconde électrode 14 de l'éclateur 4. Dans le mode de réalisation représenté, la lame élastique 34 est formée d'un seul tenant avec l'extrémité 35 de la borne de connexion destinée à assurer la connexion du dispositif à l'une des lignes. En d'autres termes, la borne de connexion 15 est monobloc et comporte la lame élastique 34 présentant la première extrémité 35 et la seconde extrémité 36.

Toutefois, il est parfaitement envisageable que la borne de connexion 15 soit formée de deux éléments distincts, à savoir une lame élastique 34 et un élément 35 destiné à assurer la connexion du dispositif à l'une des lignes, soudés l'un à l'autre.

Au niveau de son extrémité 34 opposée à l'extrémité 35 destinée à connecter le dispositif 1 à une ligne électrique, la lame élastique 34 est fixée par un organe de fixation 33 conducteur d'électricité sur la seconde électrode 14 de l'éclateur 4. La lame élastique 34 est ainsi contrainte par l'intermédiaire de l'organe de fixation 33 lorsque la brasure thermofusible 3 fixe les deux premières électrodes d'éclateur et de varistance 13 et 10 l'une à l'autre. La lame élastique 34 est en outre apte à effectuer un mouvement perpendiculaire à un plan de la première électrode 10 de varistance 2, dans le sens de l'éloignement des premières électrodes de varistance 10 et d'éclateur 13, sous l'effet d'une force de rappel lorsque la brasure thermofusible 3 ne fixe plus les deux premières électrodes d'éclateur et de varistance 13 et 10 l'une à l'autre.

Dans le mode de réalisation représenté, l'organe de fixation 33 est constitué d'une portion emboutie et trouée et d'une soudure effectuée dans la portion emboutie et passant à travers le trou pour déborder sur la seconde électrode d'éclateur 14, comme représenté sur les figures 6 à 10.

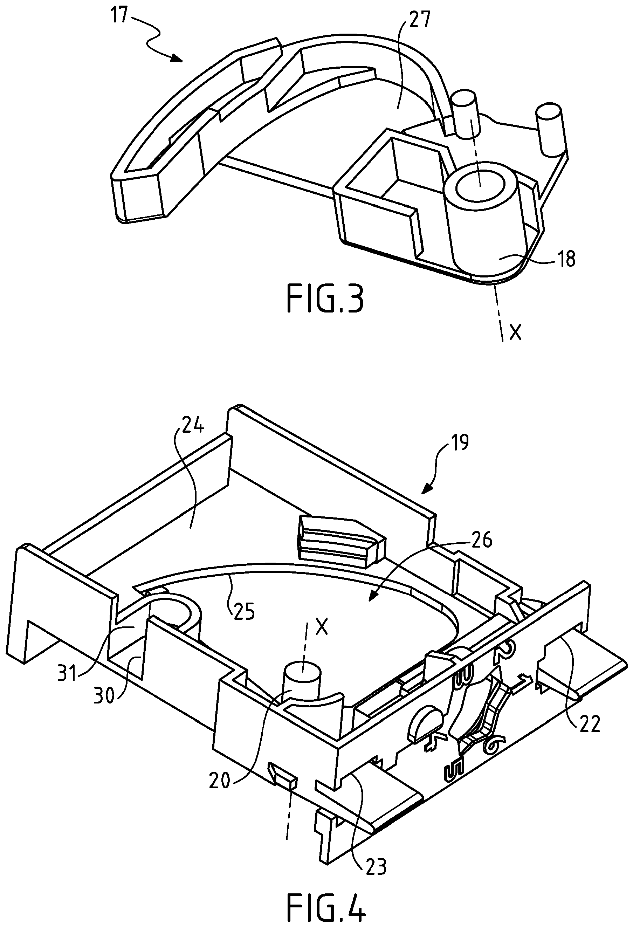

L'élément de boitier 19 présente deux orifices 22 et 23 dans lesquels sont agencés respectivement l'extrémité 35 de la borne de connexion 15 et une extrémité de la borne de connexion 16. Ainsi, les deux extrémités des bornes de connexion 15 et 16 font saillie du boîtier 32. Les deux extrémités des bornes de connexion 15 et 16 sont destinées à être respectivement connectées à la première ligne électrique 6 et à la seconde ligne électrique 5. Le boitier comporte une chaussette 21 dans laquelle est logé un élément de boitier 19 représenté sur la figure 4. L'élément de boitier 19 présente notamment une paroi ayant une surface inférieure 25 et une surface supérieure 24, la paroi étant ouverte sur une zone 26. La paroi de l'élément de boitier 19 présente un plan principal orienté parallèlement à un plan de la première électrode 10 de varistance 2. La varistance 2 est agencée en dessous de ce plan, la première électrode 10 de varistance étant en contact avec la surface inférieure de paroi 25. La zone 26 ménage un accès pour la fixation de l'éclateur 4 sur la première électrode de varistance 10.

Le dispositif 1 comporte également un organe de rappel apte à séparer les premières électrodes de varistance 2 et d'éclateur 4 lors d'une fonte de la brasure thermofusible 3. Un tel organe de rappel est dans le cas présent un ressort hélicoïdal 28 qui coopère avec l'extrémité 36 de la lame élastique 34. Le ressort hélicoïdal 28 est précontraint contre une paroi 30 d'un logement 31 de l'élément de boitier 19. Le logement 31 est de forme cylindrique d'axe perpendiculaire à la paroi 24 afin de guider le ressort hélicoïdal 28. L'extrémité 36 de la lame élastique 34 présente en outre une seconde portion emboutie formant un pion de guidage. Ledit pion de guidage est inséré dans le ressort hélicoïdal 28 et permet ainsi d'assurer son maintien en position.

Le dispositif 1 comporte en outre un isolateur en plastique 17 représenté sur la figure 3. L'isolateur 17 est apte à empêcher l'apparition d'un arc électrique entre deux électrodes lorsqu'il est disposé entre elles. L'isolateur 17 est monté mobile en rotation dans le dispositif 1, comme cela va être décrit plus en détail. L'isolateur 17 présente une lame isolante 27 sensiblement plane et un tube cylindrique 18 d'axe X perpendiculaire au plan de la lame isolante 27. Le tube cylindrique 18 est enfilé sur la tige 20 de l'élément de boitier. Le tube cylindrique 18 est ainsi guidé en rotation sur la tige 20 de sorte que l'isolateur puisse pivoter autour de l'axe X. Un ressort de torsion 29 contraint l'isolateur 17 en rotation autour de l'axe X, comme représenté sur la figure 5. Le ressort de torsion 29 est enfilé sur la tige 18 et comporte une extrémité en appui sur l'élément de boitier 19 et une extrémité en appui sur une paroi de l'isolateur 17.

A présent que la structure du dispositif 1 a été décrite, deux états de ce dispositif 1 vont être examinés plus en détail.

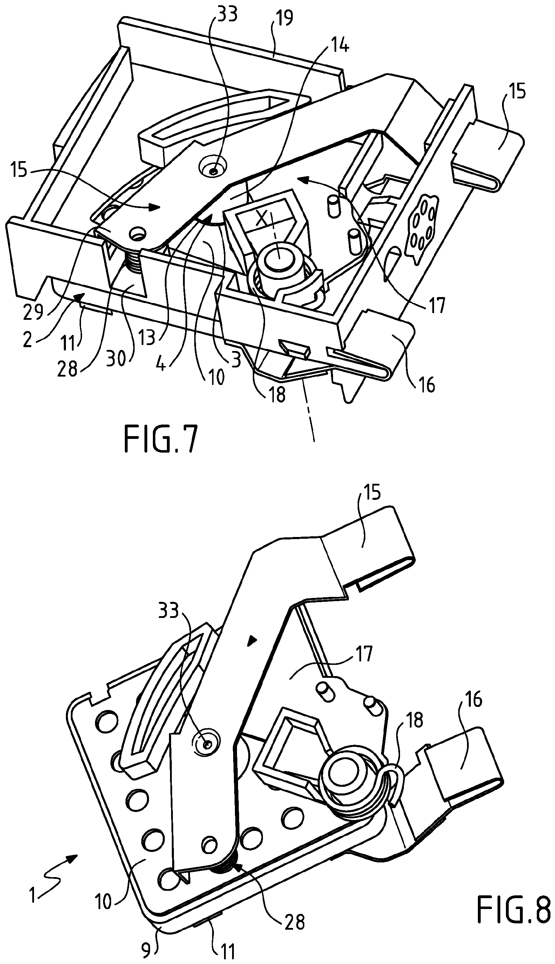

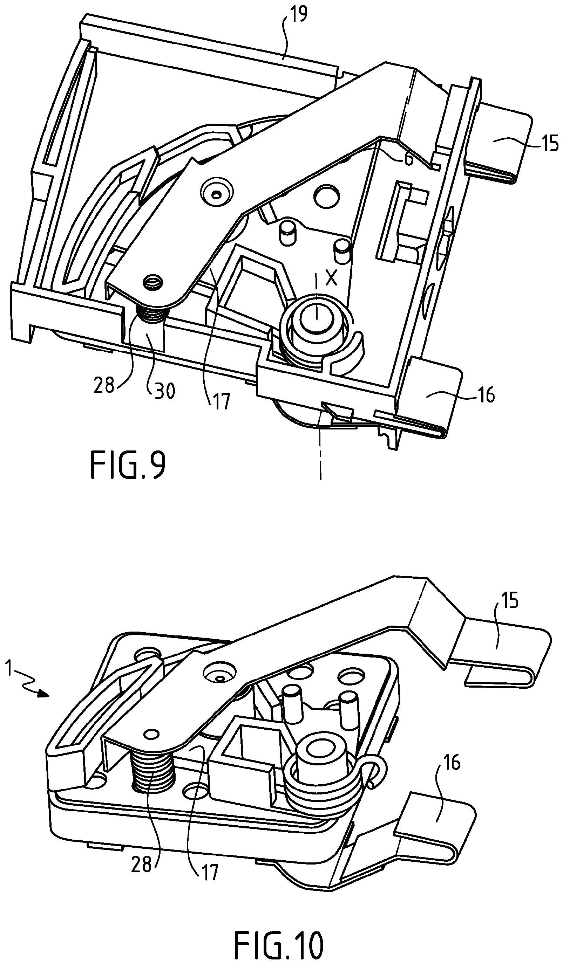

Un premier état qui sera dénommé « état connecté » va être décrit en référence aux figures 7 et 8. Un second état qui sera dénommé « état déconnecté » va être décrit en référence aux figures 9 et 10.

Dans son état connecté, le dispositif permet la connexion électrique entre la première électrode 13 d'éclateur 4 et la première électrode 10 de varistance 2 par l'intermédiaire de la brasure thermofusible 3. Comme expliqué précédemment, la lame élastique 34 et le ressort hélicoïdal 28 sont élastiquement précontraints. L'isolateur 17 est maintenu élastiquement en butée sur le corps de l'éclateur 12 par le ressort 29.

Le fonctionnement d'un tel dispositif 1 lors d'une surtension transitoire, par exemple provoquée par la foudre, entre les lignes 5 et 6 électriquement connectées aux bornes de connexion 15 et 16 va être décrit. La surtension amorce l'éclateur 4. En effet, l'éclateur 4 passe de l'état de très haute impédance à un état proche du court-circuit lors de l'application d'une tension supérieure à un seuil de tension entre la ligne électrique 5 et la ligne électrique 6.

Par ailleurs, cette surtension induit un courant qui traverse la varistance 2 et l'éclateur 4. Le courant traversant la varistance 2 et l'éclateur 4 induit alors un échauffement progressif de la varistance 2 et de l'éclateur 4, et, par conduction, un échauffement progressif de la brasure thermofusible 3 par l'intermédiaire des ponts thermiques 7 et 8. La brasure thermofusible 3 passe en état liquide et ne fixe plus la varistance 2 et l'éclateur 4. L'isolation entre les lignes électriques 5 et 6 est effective.

L'état déconnecté du dispositif 1 va à présent être décrit plus en détail en référence aux figures 9 et 10.

Dans son état déconnecté, le dispositif ne permet plus la connexion électrique entre la première électrode 13 d'éclateur 4 et la première électrode 10 de varistance 2 car la brasure thermofusible 3 est fondue.

Dans cet état déconnecté, la fonction de fixation des premières électrodes 10 et 13 d'éclateur 4 et de varistance 2 n'est plus remplie par la brasure thermofusible 3.

Ainsi, la borne de connexion 15 et le ressort hélicoïdal 28 retournent élastiquement dans un état libre dans lequel ils ne sont plus précontraints. Ce faisant, la borne de connexion 15 entraîne l'éclateur 4 par l'intermédiaire de l'organe de fixation 33, dans une direction perpendiculaire au plan de la première électrode 10 de varistance 2 et dans le sens de l'éloignement des premières électrodes 10 et 13 d'éclateur 4 et de varistance 2.

La lame isolante 27 n'est plus en butée sur le corps d'éclateur 12 et s'intercale entre les premières électrodes 10 et 13 d'éclateur 4 et de varistance 2. La lame isolante 27 isole donc les premières électrodes 10 et 13 d'éclateur 4 et de varistance 2 l'une de l'autre. La lame isolante 27 évite ainsi l'apparition d'un arc électrique entre les premières électrodes d'éclateur et de varistance

La fabrication d'un tel composant 1 est aisée et peut être industrialisée et effectuée en série.

Ainsi, le dispositif 1 est apte à protéger les lignes 5 et 6 des incendies en les déconnectant totalement lors d'une élévation de température au-delà d'un seuil de température.

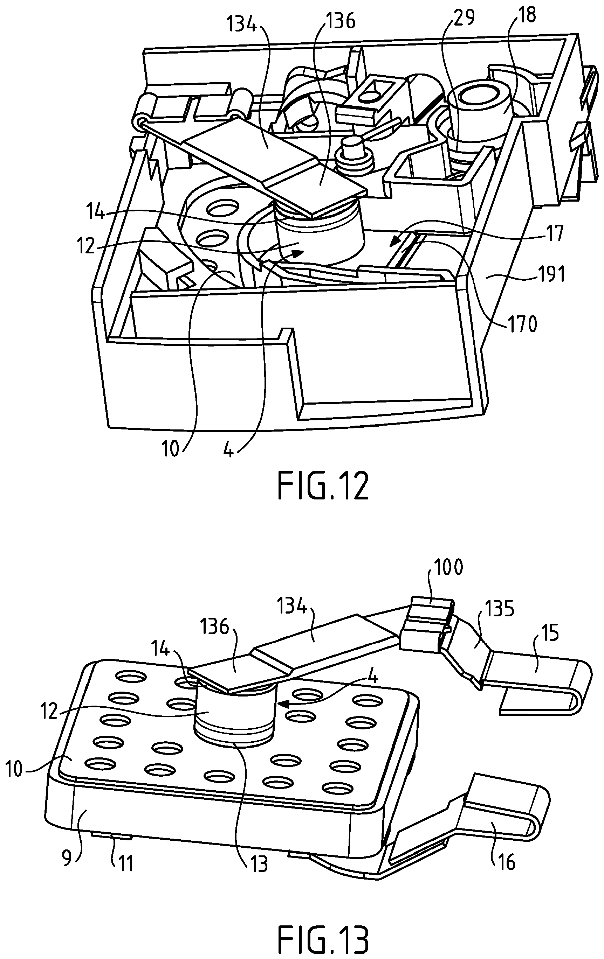

Un autre mode de réalisation de l'invention est représenté en référence aux figures 12 et 13. Les éléments similaires ou identiques au mode de réalisation représenté en référence aux figures 1 à 10 sont identifiés par les mêmes chiffres de référence.

Dans ce mode de réalisation, comme représenté sur la figure 13, la borne de connexion 15 est formée de deux parties distinctes : une lame souple 134 et une borne 135 destinée à assurer la connexion du dispositif à l'une des lignes

La lame souple 134 et la borne 135 sont fixées l'une à l'autre par un organe de maintien 100 formé d'un seul tenant avec la borne 135. L'organe de maintien 100 représenté est formé d'une plaquette métallique rectangulaire repliée sur une première extrémité de la lame souple afin d'empêcher un mouvement relatif entre la première extrémité de la lame souple 134 et la borne 135. Alternativement, l'organe de maintien 100 peut être une soudure réalisée entre la lame souple 134 et la borne 135.

Une seconde extrémité 136 de la lame souple 134 est fixée par une brasure ou soudure à la seconde électrode d'éclateur 14.

La lame souple 134 est par exemple réalisée en cuivre.

La figure 12 représente le dispositif de protection dans un boitier 191 presque identique au boîtier 19.

Une différence notable de ce mode de réalisation comparativement à celui représenté en référence aux figures 1 à 10 est que l'organe de rappel apte à séparer les premières électrodes de varistance 2 et d'éclateur 4 lors d'une fonte de la brasure thermofusible 3 n'est pas un ressort hélicoïdal mais est ici confondu avec le ressort de torsion 29 de l'isolateur 17.

La lame souple 134 exerce la fonction de connexion électrique de la borne de connexion 15 avec la seconde électrode d'éclateur 14.

L'isolateur 17 est ainsi apte à exercer lors de la fusion de la brasure thermofusible 3, d'une part, la fonction d'isolant électrique entre la première électrode 10 de varistance 2 et la première électrode 13 d'éclateur 4 et, d'autre part, grâce au ressort de torsion 29, la fonction de rappel apte à séparer les premières électrodes de varistance 2 et d'éclateur 4.

Ainsi, contrairement au mode de réalisation représenté sur les figures 1 à 10, la lame élastique 134 ne comporte pas une extrémité coopérant avec un ressort hélicoïdal exerçant sur la lame élastique 134 un effort tendant à éloigner ladite extrémité de la première électrode 10 de la varistance 13.

Le dispositif de protection représenté aux figures 12 et 13 fonctionne notamment comme décrit ci-dessous.

L'isolateur 17 présente une portion 170 d'épaisseur décroissante ayant une fonction de rampe ?. Dans l'état connecté du dispositif, la portion 170 de l'isolateur 17 est maintenue élastiquement en butée contre le corps d'éclateur 12 ou contre la première électrode d'éclateur 13 par la force du ressort de torsion 29.

La force de rappel du ressort de torsion 29 se traduit par une force exercée par la portion 170 de l'isolateur 17 sur le corps d'éclateur 12 ou contre la première électrode d'éclateur 13.

Lors d'une fusion de la brasure thermofusible 3, la fonction de fixation des premières électrodes 10 et 13 d'éclateur 4 et de varistance 2 n'est plus remplie par la brasure thermofusible 3.

Ainsi, la portion 170 de l'isolateur n'est plus retenue par le corps d'éclateur 12 ou contre la première électrode d'éclateur 13 et force l'éclateur 4 à se déplacer verticalement vers le haut du dispositif.

La portion 170 de l'isolateur 17 s'intercale alors entre la première électrode 10 de la varistance 2 et la première électrode 13 de l'éclateur 4 afin d'agir en tant qu'isolant, ou encore coupe-arc.

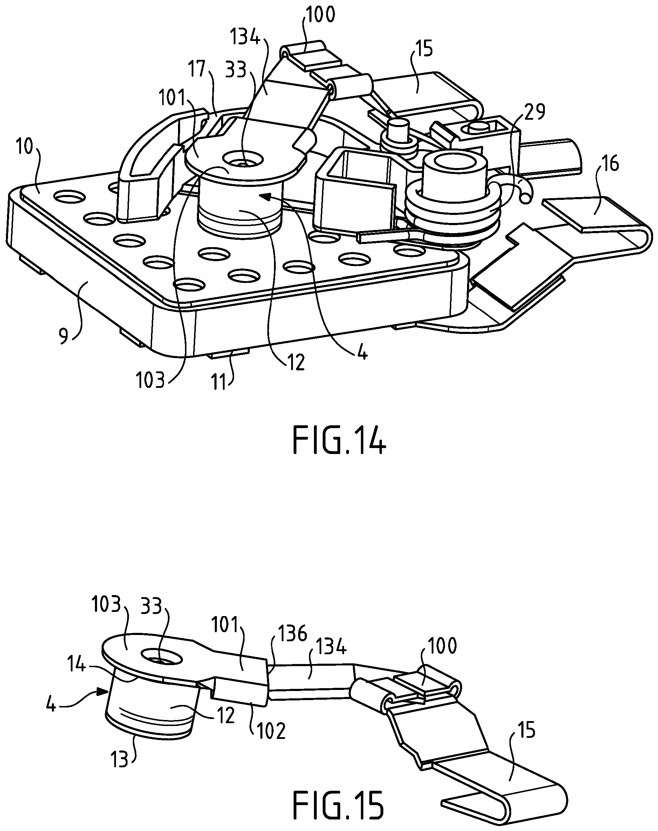

Un autre mode de réalisation de l'invention est représenté en référence aux figures 14 et 15. Les éléments similaires ou identiques au mode de réalisation représenté en référence aux figures 12 et 13 sont identifiés par les mêmes chiffres de référence.

La seconde extrémité 136 de la lame souple 134 est fixée par l'intermédiaire d'un organe de maintien 101 à la seconde électrode d'éclateur 14. Cet organe de maintien 101 est une plaquette métallique conductrice d'électricité, également appelée cosse, distincte de la lame souple 134 et fixé à celle-ci par une portion 102 de l'organe de maintien 101.

La portion 102 de l'organe de maintien 101 est une plaquette métallique rectangulaire repliée sur la seconde extrémité 136 de la lame souple 134 afin d'empêcher un mouvement relatif entre la seconde extrémité 136 de la lame souple 134 et l'organe de maintien 101.

L'organe de maintien 101 présente également une seconde portion 103 de forme circulaire comportant un organe de fixation 33 pour fixer la seconde électrode d'éclateur 14 et assurer la connexion électrique entre la lame souple 134 et la seconde électrode d'éclateur 14.Cet organe de fixation 33 est constitué d'une portion emboutie et trouée et d'une soudure effectuée dans la portion emboutie et passant à travers le trou pour déborder sur la seconde électrode d'éclateur 14.

Le mode de réalisation du dispositif représenté sur les figures 14 et 15 fonctionne de la même manière que celui représenté sur les figures 12 et 13 en ce qui concerne le passage du dispositif d'un état connecté à un état déconnecté.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication. L'usage de l'article indéfini « un » ou « une » pour un élément ou une étape n'exclut pas, sauf mention contraire, la présence d'une pluralité de tels éléments ou étapes.

Dans les revendications, tout signe de référence entre parenthèses ne saurait être interprété comme une limitation de la revendication.

## Revendications

1. Dispositif de protection (1) contre les surtensions transitoires, comportant:
- une varistance (2) comportant un corps de varistance (9) et une première et une deuxième électrodes (10, 11) disposées de part et d'autre du corps de varistance (9), le corps de varistance (9) étant apte à monter en température lorsque la tension imposée entre les deux électrodes (10, 11) dépasse un premier seuil,
- un éclateur (4) comportant un corps d'éclateur (12) et une première et une deuxième électrodes (13, 14) d'éclateur disposées de part et d'autre du corps d'éclateur, le corps d'éclateur étant apte à générer un arc électrique entre les deux électrodes (13, 14) et à s'échauffer lorsque la tension imposée entre les deux électrodes (13, 14) dépasse un second seuil,
- la seconde électrode (11) de varistance étant destinée à être connectée à une première ligne électrique (5) et la seconde électrode d'éclateur (14) étant apte à être connectée à une seconde ligne électrique (6), ledit dispositif de protection étant **caractérisé en ce qu'**il comporte :
- une brasure thermofusible (3) fixant la première électrode (13) de l'éclateur (4) et la première électrode (10) de la varistance (2), la brasure thermofusible (3) étant conductrice d'électricité et étant apte à fondre au-delà d'un seuil de température lorsque la varistance (2) ou l'éclateur (4) s'échauffe, et
- un organe de rappel (28, 15, 29) exerçant un effort de rappel tendant à éloigner la première électrode (10) de la varistance (2) de la première électrode (13) d'éclateur (4) de manière à permettre une séparation entre la première électrode (10) de la varistance et la première électrode (13) d'éclateur lors d'une fusion de la brasure thermofusible (3).

2. Dispositif de protection selon la revendication 1, comportant en outre une lame (34) fixée à l'éclateur, la lame (34) étant apte à se déplacer lors de la fusion de la brasure thermofusible d'une position de connexion dans laquelle les premières électrodes (10, 13) d'éclateur et de varistance sont fixées par la brasure thermofusible (3) à une position de déconnexion dans laquelle les premières électrodes (10, 13) d'éclateur et de varistance sont placées à distance l'une de l'autre.

3. Dispositif de protection selon la revendication 2, dans lequel la lame est fixée à l'éclateur via la seconde électrode et est conductrice d'électricité, de sorte à assurer une connexion électrique entre la seconde électrode d'éclateur (14) et la seconde ligne électrique (6).

4. Dispositif de protection selon la revendication 2 ou 3, dans lequel la lame est apte à se déplacer de la position de connexion de la lame (34) vers la position de déconnexion de la lame dans une direction sensiblement perpendiculaire à un plan de la première électrode d'éclateur (13) ou de varistance (10).

5. Dispositif de protection selon l'une quelconque des revendications 2 à 4, dans lequel la lame (34) est une lame élastique qui est précontrainte dans sa position de connexion de manière à exercer une force de rappel vers sa position de déconnexion.

6. Dispositif de protection selon l'une quelconque des revendications 1 à 5, comportant en outre un isolateur (17) apte à s'intercaler entre la première électrode (13) d'éclateur et la première électrode (10) de varistance (2) lorsque la brasure thermofusible (3) fond.

7. Dispositif de protection selon la revendication 6, dans lequel l'organe de rappel est un ressort (29) agissant sur l'isolateur (17) contraignant l'isolateur (17) de telle sorte que, lors d'une fusion de la brasure thermofusible (3), l'isolateur (17) déplace l'éclateur (4) et éloigne la première électrode (10) de la varistance (2) de la première électrode (13) d'éclateur (4).

8. Dispositif de protection selon l'une quelconque des revendications 2 à 5, dans lequel l'organe de rappel est un ressort (28) agissant sur la lame (34), et configuré pour rappeler la lame vers sa position de déconnexion.

9. Dispositif de protection selon la revendication 6 ou 7, dans lequel l'isolateur (17) comporte une tablette isolante (27) montée mobile d'une position non-intercalée vers une position intercalée dans laquelle la tablette isolante est disposée entre les premières électrodes de varistance et d'éclateur sous l'effet d'une force de rappel exercée par un ressort (28).

10. Dispositif de protection selon la revendication 9, dans lequel la tablette isolante est mobile en rotation entre la position non-intercalée et la position intercalée.

11. Dispositif de protection selon l'une quelconque des revendications précédentes, comportant en outre un boitier (21) dans lequel sont agencés la varistance, la brasure thermofusible et l'éclateur et deux bornes de connexion (15 , 16) faisant saillie hors du boîtier respectivement connectées à la seconde électrode d'éclateur et à la seconde électrode de varistance et destinées respectivement à être connectées à la première ligne électrique (5) et à la seconde ligne électrique (6).

## Patentansprüche

1. Schutzvorrichtung (1) gegen vorübergehende Überspannungen umfassend:
- einen Varistor (2), umfassend einen Varistorkörper (9) und eine erste und eine zweite beiderseits des Varistorkörpers angeordnete Elektrode (10, 11), wobei der Varistorkörper (9) einen Temperaturanstieg zeigt, wenn die zwischen den beiden Elektroden (10, 11) angelegte Spannung eine erste Schwelle überschreitet,
- eine Funkenstrecke (4), umfassend einen Funkenstreckenkörper und eine erste und eine zweite beiderseits der Funkenstrecke angeordnete Funkenstreckenelektrode (13, 14), wobei durch die Funkenstrecke ein Lichtbogen zwischen den zwei Elektroden herstellbar ist (13, 14) und sich die Funkenstrecke erwärmt, wenn die zwischen den beiden Elektroden (13, 14) angelegte Spannung eine zweite Schwelle überschreitet,
- wobei die zweite Elektrode des Varistors (11) verbindbar mit einer ersten elektrischen Leitung (5) und die zweite Elektrode des Varistors (14) verbindbar mit einer zweiten elektrischen Leitung (6) ist, wobei die Schutzvorrichtung **dadurch gekennzeichnet ist, dass** er umfasst:
- eine wärmeschmelzbare Lötstelle (3), welche die erste Elektrode (13) der Funkenstrecke (4) und die erste Elektrode (10) des Varistors befestigt, wobei die wärmeschmelzbare Lötstelle (3) elektrizitätsleitend und über einer Temperaturschwelle schmelzbar ist, wenn sich der Varistor oder die Funkenstrecke erwärmt, und
- ein Rückstellorgan (28, 15, 29), welches eine Rückstellkraft ausübt, um die erste Elektrode (10) des Varistors (2) von der ersten Funkenstreckenelektrode (4, 13) beabstandet zu halten, um eine Trennung zwischen der ersten Elektrode (10) des Varistors und der ersten Funkenstreckenelektrode (13) während einer Fusion der wärmeschmelzbaren Lötstelle (3) zu ermöglichen.

2. Schutzvorrichtung gemäß Anspruch 1, umfassend weiterhin ein mit der Funkenstrecke verbundenes Kontaktteil (34), wobei das Kontaktteil (34) während der Fusion der schmelzbaren Lötstelle von einer Verbindungsposition, in der die erste Funkenstreckenelektrode (10, 13) und die erste Elektrode des Varistors durch die wärmeschmelzbare Lötstelle (3) angebracht sind, in eine Trennungsposition, in der die erste Funkenstreckenelektrode (10, 13) und die erste Elektrode des Varistors voneinander beabstandet sind, bewegbar ist.

3. Schutzvorrichtung gemäß Anspruch 2, wobei das Kontaktteil durch die zweite Elektroden an der Funkenstrecke angebracht und elektrizitätsleitend ist zur Herstellung einer elektrischen Verbindung zwischen der zweiten Funkenstreckenelektrode (14) und der zweiten elektrischen Leitung (6).

4. Schutzvorrichtung gemäß Anspruch 2 oder 3, wobei das Kontaktteil von der Verbindungsposition des Kontaktteils (34) zu der Trennungsposition des Kontaktteils bewegbar in einer im Wesentlichen senkrechten Richtung auf einer Ebene der ersten Funkenstreckenelektrode (13) oder der ersten Elektrode des Varistors (10) ist.

5. Schutzvorrichtung gemäß einem der Ansprüche 2 bis 4, wobei das Kontaktteil (34) ein elastisches Teil ist, welches in seiner Verbindungsposition vorgespannt ist, so dass es eine Rückstellkraft auf seine Trennungsposition ausübt.

6. Schutzvorrichtung gemäß einem der Ansprüche 1 bis 5, umfassend weiterhin einen Isolator, welcher zwischen der ersten Funkenstreckenelektrode (13) und der ersten Elektrode (1) des Varistors einschiebbar ist, während die wärmeschmelzbare Lötstelle (3) schmilzt.

7. Schutzvorrichtung gemäß Anspruch 6, wobei das Rückstellorgan eine Feder (29) ist, welche auf den Isolator (17) einwirkt und den Isolator (17) dazu zwingt, während der Fusion der wärmeschmelzbaren Lötstelle (3) die Funkenstrecke (4) zu bewegen und die erste Elektrode (10) des Varistors (2) von der ersten Funkenstreckenelektrode (4, 13) zu beabstanden.

8. Schutzvorrichtung gemäß einem der Ansprüche 2 bis 5, wobei das Rückstellorgan eine Feder (28) ist, welche auf das Kontaktteil (34) einwirkt und dazu konfiguriert ist, das Kontaktteil in seine Trennungsposition zurückzustellen.

9. Schutzvorrichtung gemäß Anspruch 6 oder 7, wobei der Isolator (17) eine Isolationsfläche (27) umfasst, welche bewegbar von einer nicht eingeschobenen Position zu einer eingeschobenen Position angeordnet ist, wobei die Isolationsfläche unter Wirkung einer durch eine Feder (29) ausgeübten Rückstellkraft zwischen der ersten Elektrode des Varistors und der ersten Funkenstreckenelektrode angeordnet ist.

10. Schutzvorrichtung gemäß Anspruch 9, wobei die Isolationsfläche in Rotation zwischen der nicht eingeschobenen Position und der eingeschobenen Position angeordnet ist.

11. Schutzvorrichtung gemäß einem der vorstehenden Ansprüche, umfassend weiterhin ein Gehäuse, in welchem der Varistor, die wärmeschmelzbare Lötstelle und die Funkenstrecke und zwei Verbindungsklemmen (15, 16), welche über das Gehäuse überstehen und jeweils mit der zweiten Funkenstreckenelektrode und der zweiten Elektrode des Varistors verbunden sind und jeweils mit der ersten elektrischen Leitung (5) und der zweiten elektrischen Leitung (6) verbindbar sind, angeordnet sind.

## Claims

1. Device (1) for protection against transitory overvoltages, comprising:
- a varistor (2) comprising a varistor body (9) and a first and a second electrodes (10, 11) disposed on either side of the varistor body (9), the varistor body (9) being able to rise in temperature when the voltage imposed between the two electrodes (10, 11) crosses a first threshold,
- a discharge tube (4) comprising a tube body (12) and a first and a second tube electrodes (13, 14) disposed on either side of the tube body, the tube body being able to generate an electric arc between the two electrodes (13, 14) and heat up when the voltage imposed between the two electrodes (13, 14) crosses a second threshold,
- the second electrode (11) of the varistor being designed to be connected to a first electrical line (5) and the second electrode of the discharge tube (14) being designed to be connected to a second electrical line (6), the device for protection being **characterized in that** it comprises :
- a thermofusible soldering (3) securing a first electrode (13) of the discharge tube (4) and a first electrode (10) of the varistor (2), the thermofusible soldering (3) being a conductor of electricity and being able to melt beyond a temperature threshold when the varistor (2) or the discharge tube (4) heats up, and
- a restoring element (28, 15, 29) exerting a restoring force tending to move the first electrode (10) of the varistor (2) away from the first electrode (13) of the discharge tube (4) in order to allow a separation between the first electrode (10) of the varistor and the first electrode (13) of the discharge tube during a melting of the thermofusible soldering (3).

2. Device for protection according to Claim 1, furthermore comprising a blade (34) attached to the discharge tube, the blade (34) being able to move upon melting of the thermofusible soldering from a position of connection in which the first electrodes (10, 13) of the discharge tube and the varistor are attached by the thermofusible soldering (3) to a position of disconnection in which the first electrodes (10, 13) of the discharge tube and the varistor are placed at a distance from one another.

3. Device for protection according to Claim 2, wherein the blade is attached to the discharge tube via the second electrode and is a conductor of electricity, so as to ensure an electrical connection between the second electrode of the discharge tube (14) and the second electrical line (6).

4. Device for protection according to Claim 2 or 3, wherein the blade is able to move from the position of connection of the blade (34) to the position of disconnection of the blade in a direction substantially perpendicular to a plane of the first electrode of the discharge tube (13) or the varistor (10).

5. Device for protection according to any one of Claims 2 to 4, wherein the blade (34) is an elastic blade which is prestressed in its position of connection so as to exert a restoring force toward its position of disconnection.

6. Device for protection according to any one of Claims 1 to 5, further comprising an insulator (17) able to be inserted between the first electrode (13) of the discharge tube and the first electrode (10) of the varistor (2) when the thermofusible soldering (3) melts.

7. Device for protection according to Claim 6, wherein the restoring element is a spring (29) acting on the insulator (17) and constraining the insulator (17) so that, upon melting of the thermofusible soldering (3), the insulator (17) moves the discharge tube (4) and separates the first electrode (10) of the varistor (2) from the first electrode (13) of the discharge tube (4).

8. Device for protection according to any one of Claims 2 to 5, wherein the restoring element is a spring (28) acting on the blade (34), and configured to return the blade to its position of disconnection.

9. Device for protection according to Claim 6 or 7, wherein the insulator (17) comprises an insulating shelf (27) mounted so that it can move from a non-inserted position to an inserted position in which the insulating shelf is disposed between the first electrodes of the varistor and the discharge tube under the effect of a restoring force exerted by a spring (28).

10. Device for protection according to Claim 9, wherein the insulating shelf is movable in rotation between the non-inserted position and the inserted position.

11. Device for protection according to any one of the preceding claims, furthermore comprising a housing (21) in which are arranged the varistor, the thermofusible soldering and the discharge tube and two connection terminals (15, 16) emerging from the housing, being respectively connected to the second electrode of the discharge tube and the second electrode of the varistor and designed respectively to be connected to the first electrical line (5) and to the second electrical line (6).
